# EUROPEAN PATENT SPECIFICATION

(11) **EP 3 402 247 B1**
(45) Date of publication and mention of the grant of the patent: **03.06.2020**
(21) Application number: 16885560.9
(22) Date of filing: 18.01.2016
(51) Int. Cl.: H04W 48/08, H04W 36/12, H04W 48/18, H04W 28/02

(54) **CONGESTION CONTROL METHOD AND DEVICE**
VERFAHREN UND VORRICHTUNG ZUR ÜBERLASTREGELUNG
PROCÉDÉ ET DISPOSITIF DE MAÎTRISE D'ENCOMBREMENT

(43) Date of publication of application: 14.11.2018
(73) Proprietor: Huawei Technologies Co., Ltd., Longgang District Shenzhen, Guangdong 518129 (CN)
(72) Inventor: WANG, Yuan, Shenzhen Guangdong 518129 (CN); ZHU, Fenqin, Shenzhen Guangdong 518129 (CN); SHU, Lin, Shenzhen Guangdong 518129 (CN)
(74) Representative: Gill Jennings & Every LLP
(86) International application number: PCT/CN2016/071306
(87) International publication number: WO 2017/124287

(56) References cited:
- WO-A1-2011/160308
- WO-A1-2011/160308
- WO-A1-2017/079074
- CN-A- 102 547 912
- INTERDIGITAL: "Solution for Congestion Control based on DCN Type", 3GPP DRAFT; S2-153964, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Anaheim, California, USA; 20151116 - 20151120 16 November 2015 (2015-11-16), XP051014046, Retrieved from the Internet: URL:http://www.3gpp.org/ftp/Meetings_3GPP_ SYNC/SA2/Docs/ [retrieved on 2015-11-16]
- "3rd Generation Partnership Project; Technical Specification Group Services and System Aspects; Enhancements of Dedicated Core Networks selection mechanism; (Release 14)", 3GPP STANDARD; 3GPP TR 23.711, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 15 December 2015 (2015-12-15), pages 1-20, XP051046490, [retrieved on 2015-12-15]
- HUAWEI ET AL: "Solution for enhanced dedicated core network selection", 3GPP DRAFT; S2-153307_SOLUTION FOR ENHANCED DEDICATED CORE NETWORK SELECTION_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. SA WG2, no. Chengdu, China; 20151019 - 20151023 13 October 2015 (2015-10-13), XP051034961, Retrieved from the Internet: URL:http://www.3gpp.org/ftp/tsg_sa/WG2_Arc h/TSGS2_111_Chengdu/Docs/ [retrieved on 2015-10-13]
- INTERDIGITAL: 'Solution for Congestion Control based on DCN Type' 3GPP SA WG2 MEETING #112 S2-153964 20 November 2015, pages 2 - 153964, XP051014046
- INTERDIGITAL: 'Key Issue: Congestion Control for DCN Types' 3GPP SA WG2 MEETING #112 S2-154326 20 November 2015, XP051014359

## Description

### TECHNICAL FIELD

The present disclosure relates to the field of communications technologies, and in particular, to a congestion control method and apparatus.

### BACKGROUND

As mobile communications networks evolve and applications having different communications characteristics emerge, UEs (User Equipment, user equipment) of different communications types appear. Therefore, operators provide a solution of separately deploying DCNs (Dedicated Core Network, dedicated core network) for the UEs of different communications types. When requesting to access a DCN, UE sends an access request to a connected RAN (Radio Access Network, radio access network) node, where the access request carries a type of the DCN that the UE requests to access. The RAN node determines, based on the DCN type reported by the UE, whether the DCN type is a DCN type over which congestion control is performed, and if it is determined that the DCN type is a DCN type over which congestion control is performed, rejects access by the UE.

In the prior art, a DCN node determines a DCN type over which congestion control needs to be performed. Specifically, the DCN node monitors a load status of each DCN type currently supported, determines to perform congestion control over a DCN type meeting a congestion condition, and notifies a RAN node of the DCN type over which congestion control is performed, so that the RAN node rejects access by UE corresponding to the DCN type. The manner of monitoring, by the DCN node, a load status of each DCN type increases resource overheads. In addition, because a core network resource occupied by each DCN type is exclusively occupied, the DCN node performs congestion control over the DCN type meeting the congestion control condition. In the solution of the prior art, if a DCN over which congestion control is performed provides a key basic service, for example, an automatic vehicle driving service, access to the DCN is also restricted. Consequently, UE cannot obtain the key basic task, and resource usage is reduced.

The publication titled, "Solution for Congestion Control based on DCN Type", 3GPP Draft; S2 -153964 relates to congestion control based on DCN type. WO2011/160308 relates to method for processing network congestion, network device and network system.

### SUMMARY

Various aspects of the present disclosure have been defined in the independent claims. Further technical features of each of these aspects have been defined in the respective dependent claims.

A priority of a DCN type supported by a core network is defined. When a DCN node is congested, congestion control may be first performed on a DCN type having a low priority. Therefore, access by UE of the DCN type having a low priority is prevented, and normal access by UE of a DCN type having a high priority can be ensured. In addition, it can be avoided that the DCN node monitors a load status of each supported DCN type, thereby reducing policy complexity of the DCN node. Furthermore, it is avoided that the DCN node is not congested but a particular type of DCN is congested, thereby improving resource usage.

In the present disclosure, the DCN type mentioned above may be replaced with a UE type, a UE usage type, a UE service type, or one of all other names that can be used to indicate UEs having a same communications characteristic.

Compared with the prior art, access by UE of a DCN type having a low priority is prevented, and normal access by UE of a DCN type having a high priority can be ensured. In addition, it can be avoided that the DCN node monitors a load status of each supported DCN type, thereby reducing policy complexity of the DCN node. Furthermore, it is avoided that the DCN node is not congested but a particular type of DCN is congested, thereby improving resource usage.

### BRIEF DESCRIPTION OF DRAWINGS

To describe the technical solutions in the aspects of the present disclosure or in the prior art more clearly, the following briefly describes the accompanying drawings required for describing the aspects or the prior art. Apparently, the accompanying drawings in the following description show merely some aspects of the present disclosure, and a person of ordinary skill in the art may still derive other drawings from these accompanying drawings without creative efforts.
FIG. 1 is a schematic diagram of a system architecture according to one of aspects of the present disclosure;
FIG. 2 is a schematic diagram of a computer device according to an aspect of the present disclosure;
FIG. 3A and FIG. 3B are a schematic flowchart of a congestion control method according to a first aspect of aspects of the present disclosure;
FIG. 4 is a schematic flowchart of a congestion control method according to a second aspect of aspects of the present disclosure;
FIG. 5 is a schematic flowchart of a congestion control method according to a third aspect of aspects of the present disclosure; and
FIG. 6 is a schematic structural diagram of a congestion control apparatus according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are merely some but not all of the aspects of the present disclosure. All other aspects obtained by a person of ordinary skill in the art based on the aspects of the present disclosure without creative efforts shall fall within the protection scope of the present disclosure.

For ease of intuitive description, a DCN type is used as an example for description in the following aspects. The DCN type is a type of a DCN node and is a type allocated by a network operator to the DCN node during network deployment, and is used to indicate a type of UE that can be served by the DCN node. A core network or a base station may select, based on the DCN type, a dedicated DCN that serves the type of UE. One DCN node may simultaneously serve multiple types of UEs. Therefore, one DCN node may be of multiple DCN types. A UE type is a type of UEs having a same communications characteristic or service characteristic, or may be referred to as a UE usage type (Usage Type), a UE service type, or all other names that can be used to indicate UEs having a same communications characteristic or service characteristic. The core network or the base station may select, based on the UE type, a dedicated DCN that serves the type of UE. In the following aspects of the present disclosure, the DCN type may be replaced with the UE type, the UE usage type, the UE service type, or one of all the other names that can be used to indicate the UEs having a same communications characteristic.

For ease of understanding of the present disclosure, the following first describes prior-art content related to the present disclosure. The 3GPP (the 3rd Generation Partnership Project, the 3rd Generation Partnership Project) establishes a specialized research project for DCN deployment, and provides the following requirements:
(1) DCN deployment does not affect implementation of existing UE.
(2) A new PLMN (Public Land Mobile Network, public land core network) identifier does not need to be introduced for DCN deployment.
(3) A same RAN node may share multiple different DCNs.
(4) UEs supporting multiple different DCN types may be simultaneously configured for a same RAN node. In an existing 3GPP communications system, an MME (Mobility Management Entity, mobility management entity) is a RAN node in a 4G architecture, and an SGSN (Serving GPRS Support Node GPRS, serving GPRS support node) is a RAN node in a 3G architecture.
(5) On a network deployed with a DCN, all MMEs need to support a function of a dedicated RAN node, and an MME corresponding to a DCN type is selected for UE.
(6) On a network deployed with a DCN, all MMEs need to redirect or switch UE to a proper DCN, and support transfer of DCN selection auxiliary information of UE between MMEs, so that the UE is registered with a DCN of a corresponding DCN type.

In the present disclosure, a priority of a DCN type is determined, based on the priority of the DCN type, a status of the DCN type is determined as a state of performing congestion control or a state of not performing congestion control, and when an access request sent by UE is received, a status of a type of a DCN that the UE requests to access is determined to determine whether to allow access by the UE. Therefore, when an entire DCN node is congested, congestion control may be first performed on a DCN type having a low priority. Therefore, access by UE of the DCN type having a low priority is prevented, and normal access by UE of a DCN type having a high priority can be ensured, thereby improving resource usage.

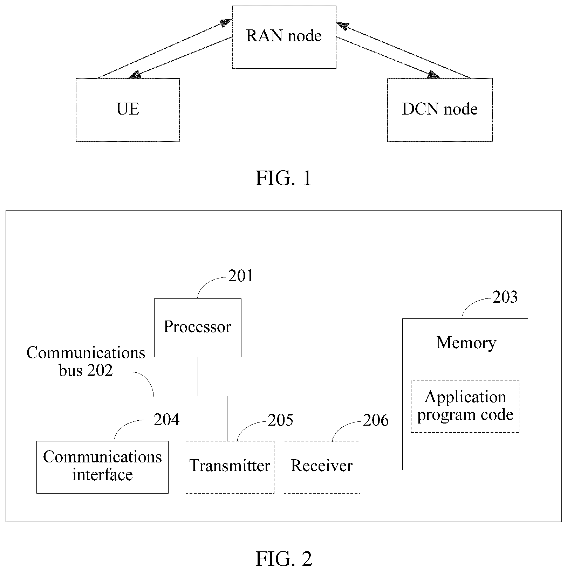

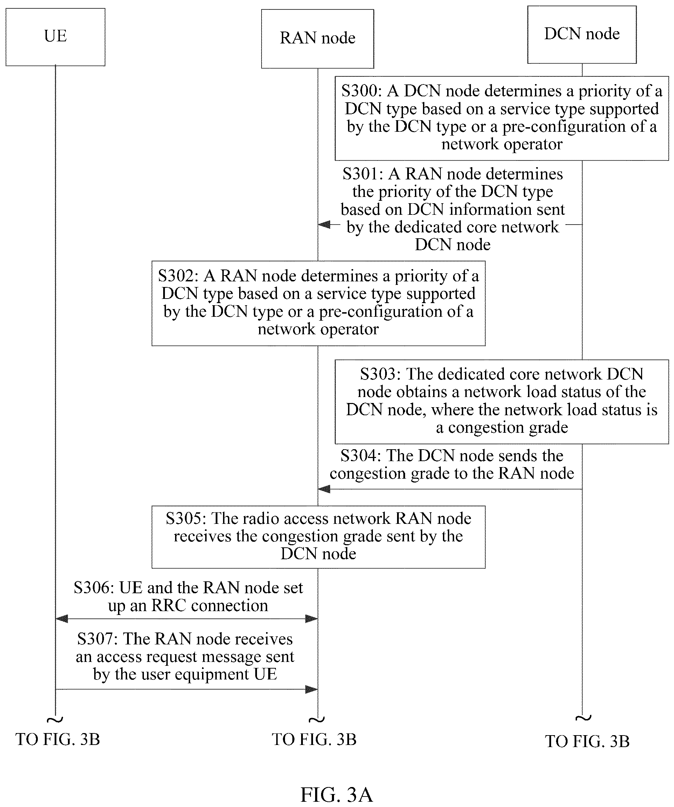

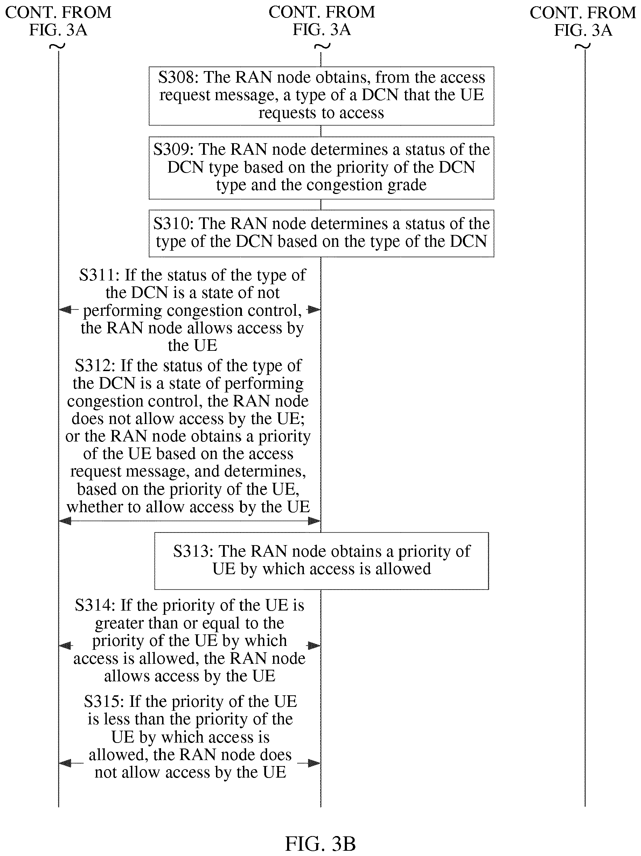

FIG. 1 is a schematic diagram of a system architecture according to one of aspects of the present disclosure. The system architecture is applied to a dedicated core network scenario or a network sharing scenario of a 3GPP communications system. The following method procedures in FIG. 3A and FIG. 3B to FIG. 5 are implemented based on the system architecture. The system architecture shown in FIG. 1 includes a DCN node and a RAN node. Details are as follows:
A DCN is a dedicated core network. A DCN node is a node device on the DCN, and is configured to serve UEs of different communications types. In FIG. 1, for a type of UE having a same communications characteristic, an operator subscribes to a DCN type (DCN type), and deploys a dedicated DCN node including an MME, a data gateway, and the like, so that UEs of a same DCN type are registered with a DCN node deployed for the UEs in a dedicated manner. The DCN node may simultaneously be of multiple DCN types. This helps an operator to manage and maintain different types of UEs in a targeted manner. A dedicated network is used in a dedicated manner. This improves efficiency of mobility management and session management of access by a large number of UEs, and reduces network maintenance costs. In the present disclosure, a DCN may determine a priority of a DCN type, determine a status of the DCN type based on the priority of the current DCN type, and enable, based on a type of a DCN that is requested by UE, a RAN node to control access by the UE.

A RAN node is a radio access network node. In an EPS (Evolved Packet System, evolved packet system) architecture, a RAN node is an eNodeB (evolved base station). In a 3G communications system architecture, a RAN node is a NodeB (base station). A RAN node may also determine a priority of a DCN type, determine a status of the DCN type based on the priority of the current DCN type, and control, based on a type of a DCN that is requested by UE, access by the UE.

Optionally, the system architecture shown in FIG. 1 further includes UE. The UE is user equipment. In the present disclosure, access to a network may be requested, and a type of a to-be-accessed DCN that is requested is carried. If a status of the type of the to-be-accessed DCN that is requested is a state of performing congestion control, access to the DCN by the UE is rejected; if a status of the type of the to-be-accessed DCN that is requested is a state of not performing congestion control, access to the DCN by the UE is allowed.

In this aspect of the present disclosure, the DCN node and the RAN node may coordinate with each other to participate in control over access by the UE. The following provides descriptions according to different aspects.

In this aspect of the present disclosure, a priority of a DCN type supported by a core network is defined. When the DCN node is congested, congestion control may be first performed on a DCN type having a low priority. Therefore, access by UE of the DCN type having a low priority is prevented, and normal access by UE of a DCN type having a high priority can be ensured. In addition, it can be avoided that the DCN node monitors a load status of each supported DCN type, thereby reducing policy complexity of the DCN node. Furthermore, it is avoided that the DCN node is not congested but a particular type of DCN is congested, thereby improving resource usage.

As shown in FIG. 2, the DCN node and the RAN node shown in FIG. 1 may be implemented in a form of a computer device (or a system) in FIG. 2.

FIG. 2 is a schematic diagram of a computer device according to an aspect of the present disclosure. The computer device includes at least one processor 201, a communications bus 202, a memory 203, at least one communications interface 204, a transmitter 205, and a receiver 206.

The processor 201 may be a general-purpose central processing unit (CPU), a microprocessor, an application-specific integrated circuit (application-specific integrated circuit, ASIC), or one or more integrated circuits configured to control execution of a program of the solutions of the present disclosure.

The communications bus 202 may include a path, and transfer information between the foregoing components. The communications interface 204 uses any apparatus similar to a transceiver, to communicate with another device or a communications network such as Ethernet, a radio access network (RAN), or a wireless local area network (Wireless Local Area Network, WLAN).

The memory 203 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another optical disc storage, an optical disc storage (including a compressed optical disc, a laser disc, an optical disc, a digital versatile disc, a Blu-ray disc, and the like), a magnetic disk storage medium or another magnetic storage device, or any other mediums that can be used to carry or store expected program code in a form of an instruction or a data structure and that can be accessed by a computer. However, no limitation is posed thereon. The memory may exist independently, and is connected to the processor by using the bus. The memory may alternatively be integrated in the processor.

The memory 203 is configured to store application program code for executing the solutions of the present disclosure, and the processor 201 controls execution. The processor 201 is configured to execute the application program code stored in the memory 203.

When the computer device shown in FIG. 2 is a DCN node, on one hand, the code stored in the memory 203 may be used to perform the congestion control method provided in the present disclosure, for example, determine a priority of a DCN type, determine a status of the DCN type based on the priority of the current DCN type, and control, based on a type of a DCN requested by UE, access by the UE.

During specific implementation, in an aspect, the computer device may further include the transmitter 205 and the receiver 206. The transmitter 205 communicates with the processor 201, and the receiver 206 communicates with the processor 201 and may receive, in multiple manners, signaling sent by the UE.

When the computer device shown in FIG. 2 is a RAN node, on another hand, the code stored in the memory 203 may be used to perform the congestion control method provided in the present disclosure, for example, determine a priority of a DCN type, determine a status of the DCN type based on the priority of the current DCN type, and control, based on a type of a DCN requested by UE, access by the UE.

During specific implementation, in an aspect, the computer device may further include the transmitter 205 and the receiver 206. The transmitter 205 communicates with the processor 201, and the receiver 206 communicates with the processor 201 and may receive, in multiple manners, signaling sent by the UE or a DCN node.

The computer device may be a general-purpose computer device or a dedicated computer device. During specific implementation, the computer device may be a desktop computer, a portable computer, a network server, a personal digital assistant (Personal Digital Assistant, PDA), a mobile phone, a tablet computer, a wireless terminal device, a communications device, a built-in device, or a device of a structure similar to that in FIG. 2. In this aspect of the present disclosure, a type of the computer device is not limited.

Referring to FIG. 3A and FIG. 3B, FIG. 3A and FIG. 3B are a schematic flowchart of a congestion control method according to a first aspect of aspects of the present disclosure. In the following aspects, for ease of intuitive description, a type of a DCN node is referred to as a "DCN type" and is a UE type of UE served by the DCN node, and is used to indicate UEs having a same communications characteristic. A person skilled in the art shall understand that in the following aspects, solutions obtained by replacing the DCN type with a UE type, a UE usage type, a UE service type, or one of all other names that can be used to indicate the UEs having a same communications characteristic are the same. It should be noted that one dedicated DCN node may simultaneously serve multiple types of UEs. Therefore, one DCN node may be of multiple DCN types.

A procedure of a congestion control method in this aspect shown in FIG. 3A and FIG. 3B may include the following steps.

S300: A DCN node determines a priority of a DCN type based on a service type supported by the DCN type or a pre-configuration of a network operator.

Specifically, the DCN node defines a priority for each DCN type currently supported. A priority definition criterion is based on at least one of an actual commercial scenario, a specific service type, or a network policy. For example, the DCN node may support three DCN types: MBB (Mobile Broadband, mobile broadband), IoT (Internet of Things, Internet of Things), and V2V (Vehicle to Vehicle, vehicle to vehicle). Based on the at least one of the actual commercial scenario, the specific service type, or the network policy, the DCN node may define a high priority for a DCN whose DCN type is MBB, a low priority for a DCN whose DCN type is IoT, and an intermediate priority for a DCN whose DCN type is V2V. It should be understood that a priority is used to identify a relationship between priorities of DCNs supported by a current DCN node. In addition to the foregoing expression method, a form of values or other similar forms identifying priorities all fall within the protection scope of the present disclosure.

Optionally, DCN types supported by the DCN node are not limited to the foregoing three types, and other DCN types may also be supported, and are not described one by one in this aspect.

S301: A RAN node determines the priority of the DCN type based on DCN information sent by the dedicated core network DCN node.

Specifically, the DCN node may notify UE of the priority of the DCN type, for example, add a priority of each DCN type to the DCN information delivered to the RAN node, so that the RAN node can determine the priority of each DCN type. The DCN node may send the DCN information to the RAN node by using an S1 setup (S1 setup) process (for example, an S1 Setup Response (S1 setup response)) message already defined in a standard, or a newly defined exchange message. A sending form is not limited in this aspect. The DCN message includes, but is not limited to, at least the DCN type of each DCN currently supported by the DCN node and the priority of the DCN type.

S302: A RAN node determines a priority of a DCN type based on a service type supported by the DCN type or a pre-configuration of a network operator.

Specifically, the RAN node may not need to determine the priority of the DCN type by using the DCN node, and the RAN node may define a priority for each DCN type based on at least one of an actual commercial scenario, a specific service type, or a network policy. The RAN node may obtain each DCN type supported by the DCN node, obtain a service type of each DCN type, and determine the priority of the DCN type based on at least one of the actual commercial scenario, the service type of each DCN type, or the network policy.

It should be noted that steps S300 and S301 are parallel to step S302. That is, step S303 may be performed after steps S300 and S301 are performed, or step S303 may be performed after step S302 is independently performed.

S303: The DCN node obtains a network load status of the DCN node, where the network load status is a congestion grade.

Specifically, when the entire DCN node on a network is congested, for example, the network load status of the DCN node reaches a preset load control threshold, the DCN node determines to perform congestion control, and obtains the network load status, where the network load status is the congestion grade. It should be understood that a congestion grade is used to identify a grade of congestion control that a current DCN node determines to perform. In addition to the foregoing expression method, a form of values or other similar forms identifying grades all fall within the protection scope of the present disclosure.

S304: The DCN node sends the congestion grade to the RAN node.

Specifically, the DCN node sends congestion control start information to the RAN node, where the congestion control start information includes a congestion level (congestion level) information element, used to indicate a current congestion grade, for example, a high grade, an intermediate grade, or a low grade. The congestion grade indicated by the congestion control start information depends on the network load status and the network policy. For example, a congestion grade carried in a congestion control message sent by the DCN node when a load reaches 80% may be low, and a congestion grade carried in a congestion control message sent by the DCN node when a load reaches 95% may be high.

S305: The radio access network RAN node receives the congestion grade sent by the DCN node.

Specifically, the RAN node receives the congestion control start information sent by the DCN node, obtains the congestion grade from the congestion control start information, and determines a congestion control degree.

S306: UE and the RAN node set up an RRC connection.

Specifically, the UE requests to access the RAN node, and sets up an RRC (Radio Resource Control, radio resource control) link to the RAN node.

S307: The RAN node receives an access request message sent by the user equipment UE.

Specifically, the UE sends the access request message to the RAN node, to request to access the DCN node, where the access request message carries a type of a DCN that the UE requests to access.

Optionally, the UE may send an RRC connection setup complete (the RRC connection setup complete) message to the RAN node, where the RRC connection setup complete message carries a NAS (Non-access Stratum, non-access stratum) message and the DCN type (DCN Type). The NAS message is the access request message such as an attach (attach) message or a TAU (Tracking Area Update, tracking area update) message of the UE.

S308: The RAN node obtains, from the access request message, a type of a DCN that the UE requests to access.

Specifically, the RAN node obtains, from the access request message, the type of the DCN that the UE requests to access, determines, based on the type of the DCN that the UE requests to access, whether the DCN type is a DCN type on which congestion control currently needs to be performed, and if determining that the DCN type is the DCN type on which congestion control currently needs to be performed, the RAN node refuses the UE to access the requested DCN node, or if determining that the DCN type is not the DCN type on which congestion control currently needs to be performed, the RAN node allows the UE to access the requested DCN node.

S309: The RAN node determines a status of the DCN type based on the priority of the DCN type and the congestion grade.

Specifically, the RAN node may determine a status of each DCN type based on a priority of the DCN type and a congestion grade, where the status of the DCN type is a state of performing congestion control or a state of not performing congestion control. For example, the RAN node may determine a congestion control degree based on the congestion grade, sort the DCN types based on priorities of the DCN types, and determine the status of each DCN type based on a sorting result and the congestion control degree. For example, if the congestion control grade is low, the RAN node may determine that a status of a DCN type having a low priority is the state of performing congestion control, determine that statuses of DCN types having a high priority and an intermediate priority are the state of not performing congestion control, and allow access by UEs whose DCN types have the high priority and the intermediate priority. If the congestion control grade is high, the RAN node may determine that statuses of DCN types having a low priority and an intermediate priority are the state of performing congestion control, that is, reject access by UEs whose DCN types have the low priority and the intermediate priority, determine that a status of a DCN type having a high priority is the state of not performing congestion control, and allow access by UE whose DCN type has the high priority.

Optionally, after determining the status of each DCN type, the RAN node may store a correspondence between a DCN type and a status of the DCN type.

It should be understood that a specific congestion control execution manner depends on a preset network policy, and there are different execution manners based on different networks or different operators. However, a correspondence between a specific congestion control execution manner and a congestion grade falls with the protection scope of the present disclosure.

S310: The RAN node determines a status of the type of the DCN based on the type of the DCN.

Specifically, after the RAN node obtains the type of the DCN that the UE requests to access, the RAN node may obtain, based on the stored correspondence between a DCN type and a status of the DCN type, the status of the type of the to-be-accessed DCN that is requested.

S311: If the status of the type of the DCN is a state of not performing congestion control, the RAN node allows access by the UE.

Specifically, if the RAN node learns of that the status of the type of the to-be-accessed DCN that is requested is the state of not performing congestion control, the RAN node allows access by the UE.

S312: If the status of the type of the DCN is a state of performing congestion control, the RAN node does not allow access by the UE; or the RAN node obtains a priority of the UE based on the access request message, and determines, based on the priority of the UE, whether to allow access by the UE.

Specifically, if the RAN node learns of that the status of the type of the to-be-accessed DCN that is requested is the state of performing congestion control, the RAN node rejects access by the UE, and the RAN node sends a wireless connection release message to the UE, where a backoff time indication may be carried. The UE sets a backoff timer based on the backoff time indication, and after the timer expires, the UE applies for access again. When a core network determines to end congestion control, the DCN node may send a congestion control over (congestion control over) message to the RAN node, to instruct the RAN node to end congestion control.

Specifically, if the RAN node learns of that the status of the type of the to-be-accessed DCN that is requested is the state of performing congestion control, the RAN node may continue to obtain the priority of the UE (UE Priority) from the access request message sent by the UE, and determine whether to allow access by the UE based on the priority of the UE. For example, the UE adds a NAS message, the DCN type, and the priority of the UE to an RRC connection setup complete (RRC connection setup complete) message. The priority of the UE is a priority defined for the UE on a network, for example, a gold subscriber, a silver subscriber, or a bronze subscriber. The priority of the UE may be stored in a USIM (Universal Subscriber Identity Module, universal subscriber identity module), or stored in subscription data of an HSS (Home Subscriber Server, home subscriber server) during subscription registration. In this aspect, the priority of the UE may be stored in the USIM and carried in an RRC message, and the RRC message is reported to the RAN node.

S313: The RAN node obtains a priority of UE by which access is allowed.

Specifically, after obtaining the priority of the UE, the RAN node obtains the preset priority of the UE by which access is allowed. In this aspect of the present disclosure, for example, the priority of the UE by which access is allowed is a gold subscriber or a silver subscriber.

Optionally, the RAN node may pre-store the priority of the UE by which access is allowed, or obtain, from another network element device, the priority of the UE by which access is allowed.

S314: If the priority of the UE is greater than or equal to the priority of the UE by which access is allowed, the RAN node allows access by the UE.

Specifically, in this aspect of the present disclosure, for example, the priority of the UE is a gold subscriber. The priority of the UE is a gold subscriber, the priority of the UE by which access is allowed is a gold subscriber or a silver subscriber, and the priority of the UE is greater than or equal to the priority of the UE by which access is allowed. Therefore, although the status of the type of the DCN that the UE requests to access is the state of performing congestion control, the RAN node also allows access by the UE.

S315: If the priority of the UE is less than the priority of the UE by which access is allowed, the RAN node does not allow access by the UE.

Specifically, in this aspect of the present disclosure, for example, the priority of the UE is a bronze subscriber. The priority of the UE is a bronze subscriber, the priority of the UE by which access is allowed is a gold subscriber or a silver subscriber, and the priority of the UE is less than the priority of the UE by which access is allowed. Therefore, the RAN node does not allow access by the UE.

Optionally, if the RAN node determines to perform congestion control over current access by the UE, the RAN node sends a wireless connection release message to the UE, where a backoff time indication may be carried. The UE sets a backoff timer based on the backoff time indication, and after the timer expires, the UE applies for access again. When a core network determines to end congestion control, the DCN node may send a congestion control over message to the RAN node, to instruct the RAN node to end congestion control.

As can be learned from the above, a priority of a DCN type supported by the DCN node is defined. A congestion grade is determined based on a current network load status. When the entire DCN node is congested, congestion control may be first performed on the DCN type having a low priority on the network. Therefore, access by UE of the DCN type having a low priority is prevented, and normal access by UE of a DCN type having a high priority can be ensured, thereby improving resource usage.

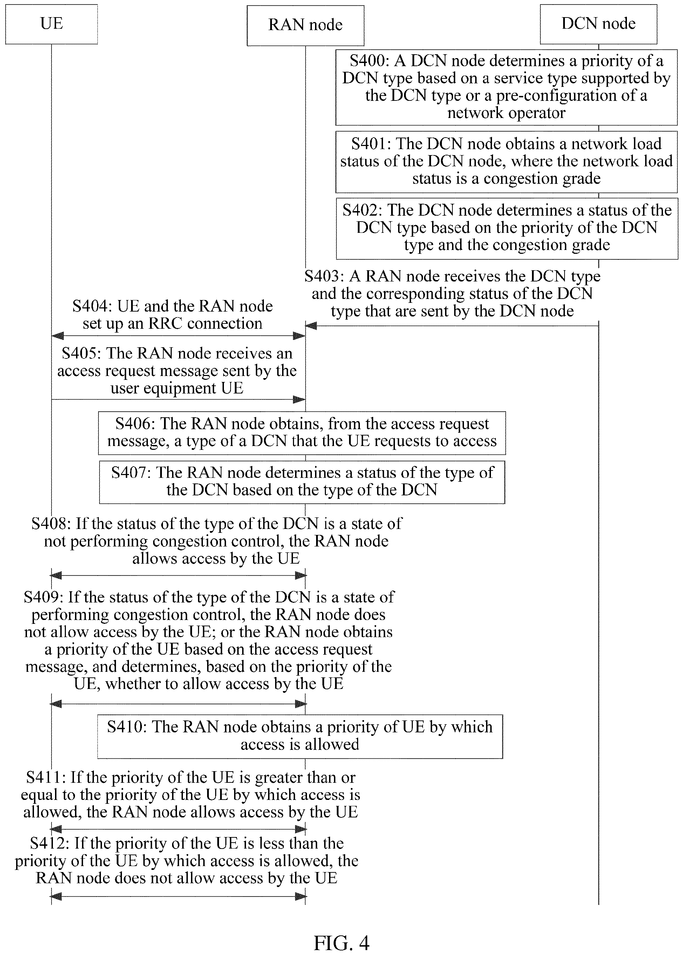

FIG. 4 is a schematic flowchart of a congestion control method according to a second aspect of aspects of the present disclosure. In the following aspects, for ease of intuitive description, a type of a DCN node is referred to as a "DCN type" and is a UE type of UE served by the DCN node, and is used to indicate UEs having a same communications characteristic. A person skilled in the art shall understand that in the following aspects, solutions obtained by replacing the DCN type with a UE type, a UE usage type, a UE service type, or one of all other names that can be used to indicate the UEs having a same communications characteristic are the same. It should be noted that one dedicated DCN node may simultaneously serve multiple types of UEs. Therefore, one DCN node may be of multiple DCN types.

A procedure of a congestion control method in this aspect shown in FIG. 4 may include the following steps.

S400: A dedicated core network DCN node determines a priority of a DCN type based on a service type supported by the DCN type or a pre-configuration of a network operator.

Specifically, an implementation of step S400 in this aspect is the same as that of step S300 in the aspect of FIG. 3A and FIG. 3B. In this aspect, details are not described again.

S401: The DCN node obtains a network load status of the DCN node, where the network load status is a congestion grade.

Specifically, an implementation of step S401 in this aspect is the same as that of step S303 in the aspect of FIG. 3A and FIG. 3B. In this aspect, details are not described again.

S402: The DCN node determines a status of the DCN type based on the priority of the DCN type and the congestion grade.

During specific implementation, in this aspect, the DCN node determines the status of the DCN type based on the priority of the DCN type and the congestion grade, and determines a DCN type over which congestion control needs to be performed. The status of the DCN type is a state of performing congestion control or a state of not performing congestion control. For example, the DCN node may determine a congestion control degree based on the congestion grade, sort DCN types based on priorities of the DCN types, and determine a status of each DCN type based on a sorting result and the congestion control degree. For example, if the congestion control grade is low, the DCN node may determine that a status of a DCN type having a low priority is the state of performing congestion control, and determine that statuses of DCN types having a high priority and an intermediate priority are the state of not performing congestion control. If the congestion control grade is high, the DCN node may determine that statuses of DCN types having a low priority and an intermediate priority are the state of performing congestion control, that is, reject access by UEs whose DCN types have the two lower priorities, determine that a status of a DCN type having a high priority is the state of not performing congestion control, and allow access by UE whose DCN type has the high priority.

Optionally, after the DCN node determines the status of each DCN type, the DCN node may store a correspondence between a DCN type and a status of the DCN type.

It should be noted that a specific congestion control execution manner depends on a preset network policy, and there are different execution manners based on different networks or different operators. However, a correspondence between a specific congestion control execution manner and a congestion grade falls with the protection scope of the present disclosure.

S403: A RAN node receives the DCN type and the corresponding status of the DCN type that are sent by the DCN node.

Specifically, the DCN node sends congestion control start information to the RAN node. The congestion control start information includes each DCN type and a corresponding status of the DCN type. The status of the DCN type is the state of performing congestion control or the state of not performing congestion control. The RAN node may store a correspondence between each DCN type and the corresponding status of the DCN type.

Optionally, the congestion control start information may include only a DCN type or a list of DCN types over which congestion control needs to be performed. The list of DCN types stores DCN types whose statuses are the state of performing congestion control.

Optionally, in addition to the DCN type or the list of DCN types over which congestion control needs to be performed, the congestion control start information may further include a DCN type or a list of DCN types over which congestion control does not need to be performed. The list of DCN types over which congestion control does not need to be performed stores DCN types whose statuses are the state of not performing congestion control.

Optionally, when a network congestion status changes, the DCN node may further send a congestion control modification message to dynamically update the status of the DCN type, for example, update the DCN type over which congestion control needs to be performed. The DCN node may send a congestion control modify (congestion control modify) message to the RAN node. DCN types included in the message indicate updated DCN types or a list of updated DCN types over which congestion control needs to be performed.

S404: UE and the RAN node set up an RRC connection.

S405: The RAN node receives an access request message sent by the user equipment UE.

S406: The RAN node obtains, from the access request message, a type of a DCN that the UE requests to access.

Specifically, an implementation of steps S404 to S406 in this aspect is the same as that of steps S306 to S308 in the aspect of FIG. 3A and FIG. 3B. In this aspect, details are not described again.

S407: The RAN node determines a status of the type of the DCN based on the type of the DCN.

S408: If the status of the type of the DCN is a state of not performing congestion control, the RAN node allows access by the UE.

S409: If the status of the type of the DCN is a state of performing congestion control, the RAN node does not allow access by the UE; or the RAN node obtains a priority of the UE based on the access request message, and determines, based on the priority of the UE, whether to allow access by the UE.

S410: The RAN node obtains a priority of UE by which access is allowed.

S411: If the priority of the UE is greater than or equal to the priority of the UE by which access is allowed, the RAN node allows access by the UE.

S412: If the priority of the UE is less than the priority of the UE by which access is allowed, the RAN node does not allow access by the UE.

Specifically, an implementation of steps S407 to S412 in this aspect is the same as that of steps S310 to S315 in the aspect of FIG. 3A and FIG. 3B. In this aspect, details are not described again.

As can be learned from the above, a priority of a DCN type supported by the DCN node is defined. A congestion grade is determined based on a current network load status. When the entire DCN node is congested, congestion control may be first performed on the DCN type having a low priority on a network. Therefore, access by UE of the DCN type having a low priority is prevented, and normal access by UE of a DCN type having a high priority can be ensured, thereby improving resource usage.

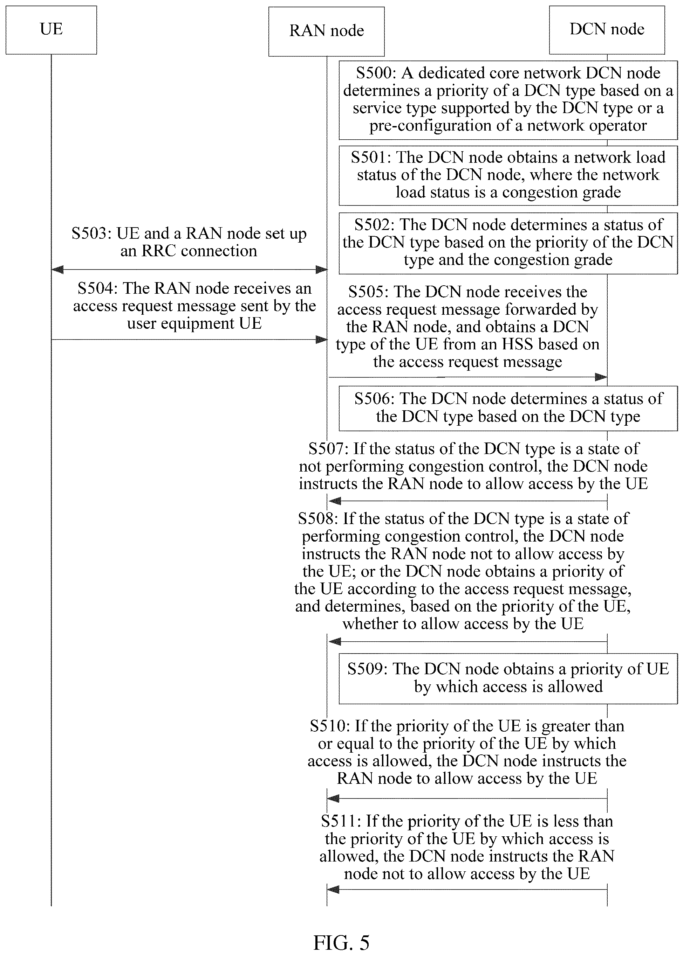

FIG. 5 is a schematic flowchart of a congestion control method according to a third aspect of aspects of the present disclosure. In the following aspects, for ease of intuitive description, a type of a DCN node is referred to as a "DCN type" and is a UE type of UE served by the DCN node, and is used to indicate UEs having a same communications characteristic. A person skilled in the art shall understand that in the following aspects, solutions obtained by replacing the DCN type with a UE type, a UE usage type, a UE service type, or one of all other names that can be used to indicate the UEs having a same communications characteristic are the same. It should be noted that one dedicated DCN node may simultaneously serve multiple types of UEs. Therefore, one DCN node may be of multiple DCN types.

A procedure of a congestion control method in this aspect shown in FIG. 5 may include the following steps.

S500: A dedicated core network DCN node determines a priority of a DCN type based on a service type supported by the DCN type or a pre-configuration of a network operator.

Specifically, an implementation of step S500 in this aspect is the same as that of step S300 in the aspect of FIG. 3A and FIG. 3B. In this aspect, details are not described again.

S501: The dedicated core network DCN node obtains a network load status of the DCN node, where the network load status is a congestion grade.

Specifically, an implementation of step S501 in this aspect is the same as that of step S303 in the aspect of FIG. 3A and FIG. 3B. In this aspect, details are not described again.

S502: The DCN node determines a status of the DCN type based on the priority of the DCN type and the congestion grade.

Specifically, an implementation of step S502 in this aspect is the same as that of step S402 in the aspect of FIG. 4. In this aspect, details are not described again.

S503: UE and a RAN node set up an RRC connection.

S504: The RAN node receives an access request message sent by the user equipment UE.

Specifically, an implementation of steps S503 and S504 in this aspect is the same as that of steps S306 and S307 in the aspect of FIG. 3A and FIG. 3B. In this aspect, details are not described again.

S505: The DCN node receives the access request message forwarded by the RAN node, and obtains a DCN type of the UE from an HSS based on the access request message.

Specifically, in this aspect of the present disclosure, the UE is allowed not to add the DCN type of the UE or other similar dedicated network selection auxiliary information to an RRC message (backward-compatible with an R-13 terminal). The DCN node may obtain the DCN type of the UE based on a NAS message of the UE. The DCN node may obtain the DCN type of the UE from the HSS (Home Subscriber Server, home subscriber server) based on the NAS message of the UE.

Optionally, the DCN node obtains the DCN type of the UE in manners including but not limited to the following four manners: (1) After the DCN node receives the NAS message of the UE forwarded by the RAN node, the DCN node may obtain subscription data of the UE from the HSS based on an identifier of the UE, where the subscription data of the UE includes a usage type (Usage Type) of the UE, and obtain the DCN type of the UE based on a correspondence between the usage type and the DCN type of the UE. (2) The UE may directly add a usage type information element of the UE to the NAS message, and the DCN node obtains the DCN type of the UE from the HSS based on a correspondence between a usage type and the DCN type of the UE. (3) Alternatively, the UE may directly add a DCN type information element of the UE to the NAS message. (4) The NAS message sent by the UE includes a permanent identifier or a temporary identifier of the UE, where the permanent identifier or the temporary identifier of the UE includes the DCN type of the UE, and the DCN node may parse the permanent identifier or the temporary identifier of the UE to obtain the DCN type.

S506: The DCN node determines a status of the DCN type based on the DCN type.

Specifically, the DCN node determines the corresponding status of the DCN type based on the DCN type of the UE obtained in the foregoing step.

Optionally, the DCN node may obtain, based on a stored correspondence between a DCN type and a status of the DCN type, a status of a type of a DCN that the UE requests to access.

S507: If the status of the DCN type is a state of not performing congestion control, the DCN node instructs the RAN node to allow access by the UE.

Specifically, if the RAN node learns of that the status of the type of the to-be-accessed DCN that is requested is the state of not performing congestion control, the DCN node sends an access permission notification to the RAN node, so that the RAN node allows, based on the notification, access by the UE.

S508: If the status of the DCN type is a state of performing congestion control, the DCN node instructs the RAN node not to allow access by the UE; or the DCN node obtains a priority of the UE based on the access request message, and determines, based on the priority of the UE, whether to allow access by the UE.

Specifically, if the DCN node learns of that the status of the type of the to-be-accessed DCN that is requested is the state of performing congestion control, the DCN node does not allow access by the UE, and the DCN node may send a request rejection message to the RAN node, where a cause value is carried to indicate that current access rejection is caused by congestion control. After receiving the request rejection message sent by the DCN node, the RAN node sends a wireless connection release message to the UE, where a backoff time indication may be carried. The UE sets a backoff timer based on the backoff time indication, and after the timer expires, the UE applies for access again. When a core network determines to end congestion control, the DCN node may send a congestion control over message to the RAN node, to instruct the RAN node to end congestion control.

Specifically, if the DCN node learns of that the status of the type of the to-be-accessed DCN that is requested is the state of performing congestion control, the DCN node may continue to obtain the priority of the UE (UE Priority) from the access request message sent by the UE, and determine, based on the priority of the UE, whether to allow access by the UE. For example, the UE adds a NAS message and the priority of the UE to an RRC connection setup complete (RRC connection setup complete) message. The priority of the UE is a priority defined for the UE on a network, for example, a gold subscriber, a silver subscriber, or a bronze subscriber. The priority of the UE may be stored in a USIM, or stored in subscription data of the HSS during subscription registration. In this aspect, the priority of the UE may be stored in the USIM and carried in an RRC message, and the RRC message is reported to the RAN node. The RAN node forwards the RRC message to the DCN node.

S509: The DCN node obtains a priority of UE by which access is allowed.

Specifically, after the DCN node obtains the priority of the UE, the DCN node obtains the preset priority of the UE by which access is allowed. In this aspect of the present disclosure, for example, the priority of the UE by which access is allowed is a gold subscriber or a silver subscriber.

Optionally, the DCN node may pre-store the priority of the UE by which access is allowed, or obtain, from another network element device, the priority of the UE by which access is allowed.

S510: If the priority of the UE is greater than or equal to the priority of the UE by which access is allowed, the DCN node instructs the RAN node to allow access by the UE.

Specifically, in this aspect of the present disclosure, for example, the priority of the UE is a gold subscriber. The priority of the UE is a gold subscriber, the priority of the UE by which access is allowed is a gold subscriber or a silver subscriber, and the priority of the UE is greater than or equal to the priority of the UE by which access is allowed. Therefore, although the status of the type of the DCN that the UE requests to access is the state of performing congestion control, the DCN node allows access by the UE. The DCN node sends an access permission notification to the RAN node, so that the RAN node allows, based on the notification, access by the UE.

S511: If the priority of the UE is less than the priority of the UE by which access is allowed, the DCN node instructs the RAN node not to allow access by the UE.

Specifically, in this aspect of the present disclosure, for example, the priority of the UE is a bronze subscriber. The priority of the UE is a bronze subscriber, the priority of the UE by which access is allowed is a gold subscriber or a silver subscriber, and the priority of the UE is less than the priority of the UE by which access is allowed. Therefore, the DCN node does not allow access by the UE.

Optionally, if the DCN node determines to perform congestion control over current access by the UE, the DCN node sends a request rejection message to the RAN node, where a cause value is carried to indicate that current access rejection is caused by congestion control. The RAN node sends a wireless connection release message to the UE based on the request rejection message sent by the DCN node, where a backoff time indication may be carried. The UE sets a backoff timer based on the backoff time indication, and after the timer expires, the UE applies for access again. When a core network determines to end congestion control, the DCN node may send a congestion control over message to the RAN node, to instruct the RAN node to end congestion control.

As can be learned from the above, a congestion control method for a dedicated network is provided. The DCN node performs a congestion control policy, and the method may be backward-compatible with UE and a RAN node that support only R-13 DECOR. The DCN node performs congestion control at a granularity of a DCN based on a congestion control grade and the priority of the DCN type, and normal access for a DCN type having a high priority is ensured, thereby improving resource usage.

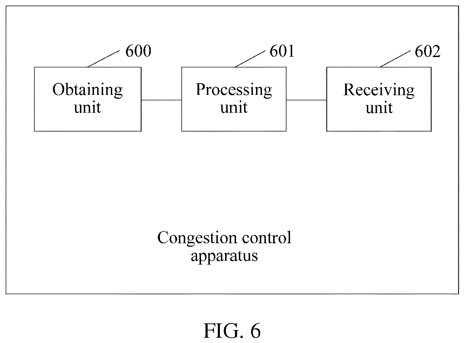

Referring to FIG. 6, FIG. 6 is a schematic structural diagram of a congestion control apparatus according to an aspect of the present disclosure. The congestion control apparatus shown in FIG. 6 includes an obtaining unit 600, a processing unit 601, and a receiving unit 602.

The obtaining unit 600 is configured to obtain a priority of a dedicated core network DCN type.

The processing unit 601 is configured to determine a status of the DCN type based on the priority of the DCN type, where the status of the DCN type is a state of performing congestion control or a state of not performing congestion control.

The receiving unit 602 is configured to receive an access request message sent by user equipment UE.

The obtaining unit 600 is further configured to obtain, based on the access request message, a type of a DCN that the UE requests to access.

The processing unit 601 is further configured to: learn of a status of the type of the DCN that the UE requests to access, and determine, based on the status of the type of the DCN that the UE requests to access, whether to allow access by the UE.

Optionally, the processing unit 601 is specifically configured to:
obtain a network load status, and determine the status of the DCN type based on the priority of the DCN type and the network load status.

Optionally, the network load status is a congestion grade, and the processing unit 601 is specifically configured to:
determine the status of the DCN type based on the priority of the DCN type and the congestion grade.

Optionally, the congestion control apparatus is integrated in a radio access network RAN node.

Optionally, when the congestion control apparatus is integrated in the RAN node, the processing unit 601 is specifically configured to: receive the network load status sent by a DCN node. The foregoing functional units are configured to perform related steps of steps S304 and S305 in the aspect of FIG. 3A and FIG. 3B.

Optionally, when the congestion control apparatus is integrated in the RAN node, the obtaining unit 600 is specifically configured to: determine the priority of the DCN type based on a service type supported by the DCN type or a pre-configuration of an operator; or determine the priority of the DCN type based on DCN information sent by the DCN node. The foregoing functional units are configured to perform related steps of step S300 in the aspect of FIG. 3A and FIG. 3B, step S400 in FIG. 4, step S500 in the aspect of FIG. 5, and step S301 in FIG. 3A and FIG. 3B.

Optionally, the obtaining unit 600 is specifically configured to obtain, from the access request message, the type of the DCN that the UE requests to access. The foregoing functional units are configured to perform related steps of step S308 in the aspect of FIG. 3A and FIG. 3B and step S406 in FIG. 4.

Optionally, the congestion control apparatus is integrated in a DCN node.

Optionally, when the congestion control apparatus is integrated in the DCN node, the processing unit 601 is specifically configured to: obtain the network load status of the DCN node. The foregoing functional units are configured to perform related steps of step S303 in the aspect of FIG. 3A and FIG. 3B, step S401 in the aspect of FIG. 4, and step S501 in the aspect of FIG. 5.

Optionally, when the congestion control apparatus is integrated in the DCN node, the obtaining unit 600 is specifically configured to: obtain, from the access request message, the type of the DCN that the UE requests to access; or obtain the DCN type of the UE from a home subscriber server HSS based on the access request message. The foregoing functional units are configured to perform related steps of step S308 in the aspect of FIG. 3A and FIG. 3B, step S406 in FIG. 4, and step S505 in FIG. 5.

Optionally, when the congestion control apparatus is integrated in the DCN node, the obtaining unit 600 is specifically configured to: determine the priority of the DCN type based on a service type supported by the DCN type or a pre-configuration of a network operator. The foregoing functional units are configured to perform related steps of step S300 in the aspect of FIG. 3A and FIG. 3B, step S400 in FIG. 4, and step S500 in the aspect of FIG. 5.

Optionally, the processing unit 601 is specifically configured to: if the status of the type of the DCN is the state of not performing congestion control, allow access by the UE; or if the status of the type of the DCN is the state of performing congestion control, skip allowing access by the UE.

Optionally, the processing unit 601 is specifically configured to: if the status of the type of the DCN is the state of performing congestion control, obtain a priority of the UE based on the access request message, and determine, based on the priority of the UE, whether to allow access by the UE.

Optionally, the processing unit 601 is specifically configured to: obtain a priority of UE by which access is allowed; and if the priority of the UE is greater than or equal to the priority of the UE by which access is allowed, allow access by the UE; or if the priority of the UE is less than the priority of the UE by which access is allowed, skip allowing access by the UE.

The foregoing functional units are configured to perform related steps of steps S312 to S315 in the aspect of FIG. 3A and FIG. 3B, steps S409 to S412 in FIG. 4, and steps S508 to S512 in the aspect of FIG. 5.

An aspect of the present disclosure further provides a computer storage medium, configured to store a computer software instruction used by the congestion control apparatus shown in FIG. 6. The computer software instruction includes a program designed to implement the foregoing method aspects. During implementation of the foregoing method, access by UE of a DCN type having a low priority can be prevented, and normal access by UE of a DCN type having a high priority can be ensured. In addition, it can be avoided that a DCN node monitors a load status of each supported DCN type, thereby reducing policy complexity of the DCN node. Furthermore, it is avoided that the DCN node is not congested but a particular type of DCN is congested, thereby improving resource usage.

With descriptions of the foregoing implementations, a person skilled in the art may clearly understand that the present disclosure may be implemented by hardware, firmware or a combination thereof. When the present disclosure is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM or another optical disc storage, a disk storage medium or another magnetic storage device, or any other medium that can carry or store expected program code in a form of an instruction or a data structure and that can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present disclosure includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A congestion control method, applied to a dedicated core network, DCN, scenario having a DCN node of multiple DCN types, and comprising:
determining (301) a priority of each dedicated core network DCN type, based on DCN information received from the DCN node;
receiving (305) a load status of the DCN node from the DCN node;
receiving (307) an access request message sent by user equipment, UE;
obtaining (308), based on the access request message, a type of a DCN that the UE requests to access, and determining (309) of a status of the type of the DCN that the UE requests to access; and
determining (310), based on the status of the type of the DCN that the UE requests to access, whether to allow access by the UE;
wherein determining (309) by the RAN a status of the DCN type comprises determining the status of each DCN type based on the priority of said DCN type and the network load status;
wherein the network load status is a congestion grade, and the determining (309) the status of each DCN type based on the priority of said DCN type and the network load status comprises:
determining the status of each DCN type based on the priority of said DCN type and the congestion grade;
wherein the method is performed by a radio access network RAN node.

2. The method according to claim 1, wherein the obtaining the network load status comprises:
receiving, by the radio access network RAN node, the network load status sent by the DCN node.

3. The method according to claim 2, wherein the obtaining a priority of a dedicated core network DCN type comprises:
determining, by the RAN node, the priority of the DCN type based on a service type supported by the DCN type or a pre-configuration of an operator; or
determining, by the RAN node, the priority of the DCN type based on DCN information sent by the DCN node.

4. A congestion control method, applied to a dedicated core network, DCN, scenario having a DCN node of multiple DCN types, and comprising:
obtaining (500) a priority of each dedicated core network DCN type;
determining (502) a status of each DCN type based on the priority of said DCN type, wherein the status of each DCN type is a state of performing congestion control or a state of not performing congestion control;
receiving (505) an access request message sent by user equipment, UE, the access request message having been received and forwarded by a RAN node;
obtaining, based on the access request message, a type of a DCN that the UE requests to access, and learning of a status of the type of the DCN that the UE requests to access; and
determining (506), based on the status of the type of the DCN that the UE requests to access, whether to allow access by the UE;
wherein the determining a status of each DCN type based on the priority of said DCN type comprises:
obtaining (501) a network load status, and determining the status of each DCN type based on the priority of said DCN type and the network load status;
wherein the network load status is a congestion grade, and the determining (502) the status of each DCN type based on the priority of said DCN type and the network load status comprises:
determining the status of each DCN type based on the priority of said DCN type and the congestion grade;
wherein the method is performed by the DCN node.

5. The method according to claim 4, wherein and wherein the obtaining a network load status comprises: obtaining, by the DCN node, the network load status of the DCN node.

6. The method according to claim 5, wherein the obtaining, based on the access request message, a type of a DCN that the UE requests to access comprises:
obtaining, by the DCN node from the access request message, the type of the DCN that the UE requests to access, or obtaining, by the DCN node, the DCN type of the UE from a home subscriber server HSS based on the access request message.

7. The method according to any one of claims 4 to 6, wherein the obtaining a priority of a dedicated core network DCN type comprises:
determining, by the DCN node, the priority of the DCN type based on a service type supported by the DCN type or a pre-configuration of a network operator.

8. A congestion control apparatus, applied to a dedicated core network, DCN, scenario having a DCN node of multiple DCN types, and comprising:
an obtaining unit (600), configured to obtain a priority of each dedicated core network DCN type, based on DCN information received from the DCN node;
a receiving unit (602) configured to to receive a load status of the DCN node from the DCN node;
the receiving unit (602), further configured to receive an access request message sent by user equipment, UE, wherein
the obtaining unit is further configured to obtain, based on the access request message, a type of a DCN that the UE requests to access; and
the processing unit is further configured to: determine a status of the type of the DCN that the UE requests to access, and determine, based on the status of the type of the DCN that the UE requests to access, whether to allow access by the UE;
wherein the processing unit is specifically configured to:
determine the status of each DCN type based on the priority of said DCN type and the network load status;
wherein the network load status is a congestion grade, and the processing unit is specifically configured to:
determine the status of each DCN type based on the priority of said DCN type and the congestion grade;
wherein the congestion control apparatus is integrated in a RAN node.

9. The congestion control apparatus according to claim 8, wherein the processing unit is specifically configured to:
receive the network load status sent by the DCN node.

10. The congestion control apparatus according to claim 9, the obtaining unit is specifically configured to:
determine the priority of the DCN type based on a service type supported by the DCN type or a pre-configuration of an operator; or
determine the priority of the DCN type based on DCN information sent by the DCN node.

11. A congestion control apparatus, applied to a dedicated core network, DCN, scenario having a DCN node of multiple DCN types, and comprising:
an obtaining unit (600), configured to obtain a priority of each dedicated core network DCN type;
a processing unit (601), configured to determine a status of each DCN type based on the priority of said DCN type, wherein the status of each DCN type is a state of performing congestion control or a state of not performing congestion control; and
a receiving unit (602), configured to receive an access request message sent by user equipment, UE, the access request message having been received and forwarded by a RAN node, wherein
the obtaining unit is further configured to obtain, based on the access request message, a type of a DCN that the UE requests to access; and
the processing unit is further configured to: learn of a status of the type of the DCN that the UE requests to access, and determine, based on the status of the type of the DCN that the UE requests to access, whether to allow access by the UE;
wherein the processing unit is specifically configured to:
obtain a network load status, and determine the status of each DCN type based on the priority of said DCN type and the network load status;
wherein the network load status is a congestion grade, and the processing unit is specifically configured to:
determine the status of each DCN type based on the priority of said DCN type and the congestion grade;
wherein the congestion control apparatus is integrated in the DCN node

12. The congestion control apparatus according to claim 11, wherein the processing unit is specifically configured to:
obtain the network load status of the DCN node.

13. The congestion control apparatus according to claim 12, wherein the obtaining unit is specifically configured to:
obtain, from the access request message, the type of the DCN that the UE requests to access, or obtain the DCN type of the UE from a home subscriber server HSS based on the access request message.

14. The congestion control apparatus according to any one of claims 12 to 13, wherein the obtaining unit is specifically configured to:
determine the priority of the DCN type based on a service type supported by the DCN type or a pre-configuration of a network operator.

15. The congestion control apparatus according to any one of claims 11 to 14, wherein the processing unit is specifically configured to:
if the status of the type of the DCN is the state of not performing congestion control, allow access by the UE; or
if the status of the type of the DCN is the state of performing congestion control, skip allowing access by the UE;
if the status of the DCN type is the state of performing congestion control, obtain a priority of the UE based on the access request message, and determine, based on the priority of the UE, whether to allow access by the UE;
obtain a priority of UE by which access is allowed; and
if the priority of the UE is greater than or equal to the priority of the UE by which access is allowed, allow access by the UE; or
if the priority of the UE is less than the priority of the UE by which access is allowed, skip allowing access by the UE.

## Patentansprüche

1. Verfahren zur Überlastregelung, das auf ein Szenario eines dedizierten Kernnetzwerks (DCN) mit einem DCN-Knoten mehrerer DCN-Arten angewendet wird und Folgendes umfasst:
Bestimmen (301) einer Priorität jeder Art des dedizierten Kernnetzwerks (DCN) basierend auf DCN-Informationen, die vom DCN-Knoten empfangen werden;
Empfangen (305) eines Lastzustands des DCN-Knotens vom DCN-Knoten;
Empfangen (307) einer Zugangsanforderungsnachricht, die durch eine Benutzereinrichtung (UE) gesendet wird;
Erhalten (308), basierend auf der Zugangsanforderungsnachricht, einer Art eines DCN, zu welchem die UE Zugang anfordert, und Bestimmen (309) eines Zustands der Art des DCN, zu welchem die UE Zugang anfordert; und
Bestimmen (310), basierend auf dem Zustand der Art des DCN, zu welchem die UE Zugang anfordert, ob der Zugang durch die UE gewährt werden soll;
wobei Bestimmen (309) eines Zustands der DCN-Art durch das RAN Bestimmen des Zustands jeder DCN-Art basierend auf der Priorität der DCN-Art und dem Netzwerklastzustand umfasst;
wobei der Netzwerklastzustand eine Überlastklasse ist und das Bestimmen (309) des Zustands jeder DCN-Art basierend auf der Priorität der DCN-Art und dem Netzwerklastzustand Folgendes umfasst:
Bestimmen des Zustands jeder DCN-Art basierend auf der Priorität der DCN-Art und der Überlastklasse;
wobei das Verfahren durch einen Knoten eines Funkzugangsnetzwerks (RAN) durchgeführt wird.

2. Verfahren nach Anspruch 1, wobei das Erhalten des Netzwerklastzustands Folgendes umfasst:
Empfangen, durch den Knoten des Funkzugangsnetzwerks (RAN), des Netzwerklastzustands, der durch den DCN-Knoten gesendet wird.

3. Verfahren nach Anspruch 2, wobei das Erhalten einer Priorität einer Art eines dedizierten Kernnetzwerks (DCN) Folgendes umfasst:
Bestimmen, durch den RAN-Knoten, der Priorität der DCN-Art basierend auf einer Dienstart, die durch die DCN-Art unterstützt wird, oder einer Vorkonfiguration eines Betreibers; oder
Bestimmen, durch den RAN-Knoten, der Priorität der DCN-Art basierend auf DCN-Informationen, die durch den DCN-Knoten gesendet werden.

4. Verfahren zur Überlastregelung, das auf ein Szenario eines dedizierten Kernnetzwerks (DCN) mit einem DCN-Knoten mehrerer DCN-Arten angewendet wird und Folgendes umfasst:
Erhalten (500) einer Priorität jeder Art des dedizierten Kernnetzwerks (DCN);
Bestimmen (502) eines Zustands jeder DCN-Art basierend auf der Priorität der DCN-Art, wobei der Zustand jeder DCN-Art ein Zustand der Durchführung von Überlastregelung oder ein Zustand der Nicht-Durchführung von Überlastregelung ist;
Empfangen (505) einer Zugangsanforderungsnachricht, die durch eine Benutzereinrichtung (UE) gesendet wird, wobei die Zugangsanforderungsnachricht durch einen RAN-Knoten empfangen und weitergeleitet wurde;
Erhalten, basierend auf der Zugangsanforderungsnachricht, einer Art eines DCN, zu welchem die UE Zugang anfordert, und Erlernen eines Zustands der Art des DCN, zu welchem die UE Zugang anfordert; und
Bestimmen (506), basierend auf dem Zustand der Art des DCN, zu welchem die UE Zugang anfordert, ob der Zugang durch die UE gewährt werden soll;
wobei das Bestimmen eines Zustands jeder DCN-Art basierend auf der Priorität der DCN-Art Folgendes umfasst:
Erhalten (501) eines Netzwerklastzustands und Bestimmen des Zustands jeder DCN-Art basierend auf der Priorität der DCN-Art und dem Netzwerklastzustand;
wobei der Netzwerklastzustand eine Überlastklasse ist und das Bestimmen (502) des Zustands jeder DCN-Art basierend auf der Priorität der DCN-Art und dem Netzwerklastzustand Folgendes umfasst:
Bestimmen des Zustands jeder DCN-Art basierend auf der Priorität der DCN-Art und der Überlastklasse;
wobei das Verfahren durch den DCN-Knoten durchgeführt wird.

5. Verfahren nach Anspruch 4, wobei und wobei das Erhalten eines Netzwerklastzustands Folgendes umfasst: Erhalten, durch den DCN-Knoten, des Netzwerklastzustands des DCN-Knotens.

6. Verfahren nach Anspruch 5, wobei das Erhalten, basierend auf der Zugangsanforderungsnachricht, einer Art eines DCN, zu welchem die UE Zugang anfordert, Folgendes umfasst:
Erhalten, durch den DCN-Knoten aus der Zugangsanforderungsnachricht, der Art des DCN, zu welchem die UE Zugang anfordert, oder Erhalten, durch den DCN-Knoten, der DCN-Art der UE von einem Heimteilnehmerserver (HSS) basierend auf der Zugangsanforderungsnachricht.

7. Verfahren nach einem der Ansprüche 4 bis 6, wobei das Erhalten einer Priorität einer Art eines dedizierten Kernnetzwerks (DCN) Folgendes umfasst:
Bestimmen, durch den DCN-Knoten, der Priorität der DCN-Art basierend auf einer Dienstart, die durch die DCN-Art unterstützt wird, oder einer Vorkonfiguration eines Netzwerkbetreibers.

8. Einrichtung zur Überlastregelung, die auf ein Szenario eines dedizierten Kernnetzwerks (DCN) mit einem DCN-Knoten mehrerer DCN-Arten angewendet wird und Folgendes umfasst:
eine Erhaltungseinheit (600), die zum Erhalten einer Priorität jeder Art des dedizierten Kernnetzwerks (DCN) basierend auf DCN-Informationen, die vom DCN-Knoten empfangen werden, konfiguriert ist;
eine Empfangseinheit (602), die zum Empfangen eines Lastzustands des DCN-Knotens vom DCN-Knoten konfiguriert ist;
wobei die Empfangseinheit (602) ferner zum Empfangen einer Zugangsanforderungsnachricht, die durch eine Benutzereinrichtung (UE) gesendet wird, konfiguriert ist;
wobei die Erhaltungseinheit ferner zum Erhalten, basierend auf der Zugangsanforderungsnachricht, einer Art eines DCN, zu welchem die UE Zugang anfordert, konfiguriert ist; und
wobei die Verarbeitungseinheit ferner konfiguriert ist zum: Bestimmen eines Zustands der Art des DCN, zu welchem die UE Zugang anfordert, und Bestimmen, basierend auf dem Zustand der Art des DCN, zu welchem die UE Zugang anfordert, ob der Zugang durch die UE gewährt werden soll;
wobei die Verarbeitungseinheit insbesondere konfiguriert ist zum:
Bestimmen des Zustandsjeder DCN-Art basierend auf der Priorität der DCN-Art und dem Netzwerklastzustand;
wobei der Netzwerklastzustand eine Überlastklasse ist und die Verarbeitungseinheit insbesondere konfiguriert ist zum:
Bestimmen des Zustands jeder DCN-Art basierend auf der Priorität der DCN-Art und der Überlastklasse;
wobei die Einrichtung zur Überlastregelung in einen RAN-Knoten integriert ist.

9. Einrichtung zur Überlastregelung nach Anspruch 8, wobei die Verarbeitungseinheit insbesondere konfiguriert ist zum:
Empfangen des Netzwerklastzustands, der durch den DCN-Knoten gesendet wird.

10. Einrichtung zur Überlastregelung nach Anspruch 9, wobei die Erhaltungseinheit insbesondere konfiguriert ist zum:
Bestimmen der Priorität der DCN-Art basierend auf einer Dienstart, die durch die DCN-Art unterstützt wird, oder einer Vorkonfiguration eines Betreibers; oder
Bestimmen der Priorität der DCN-Art basierend auf DCN-Informationen, die durch den DCN-Knoten gesendet werden.

11. Einrichtung zur Überlastregelung, die auf ein Szenario eines dedizierten Kernnetzwerks (DCN) mit einem DCN-Knoten mehrerer DCN-Arten angewendet wird und Folgendes umfasst:
eine Erhaltungseinheit (600), die konfiguriert ist zum Erhalten einer Priorität jeder Art des dedizierten Kernnetzwerks (DCN);
eine Verarbeitungseinheit (601), die konfiguriert ist zum Bestimmen eines Zustands jeder DCN-Art basierend auf der Priorität der DCN-Art, wobei der Zustand jeder DCN-Art ein Zustand der Durchführung von Überlastregelung oder ein Zustand der Nicht-Durchführung von Überlastregelung ist; und
eine Empfangseinheit (602), die konfiguriert ist zum Empfangen einer Zugangsanforderungsnachricht, die durch eine Benutzereinrichtung (UE) gesendet wird, wobei die Zugangsanforderungsnachricht durch einen RAN-Knoten empfangen und weitergeleitet wurde, wobei die Erhaltungseinheit ferner konfiguriert ist zum Erhalten, basierend auf der Zugangsanforderungsnachricht, einer Art eines DCN, zu welchem die UE Zugang anfordert; und
wobei die Verarbeitungseinheit ferner konfiguriert ist zum: Erlernen eines Zustands der Art des DCN, zu welchem die UE Zugang anfordert, und Bestimmen, basierend auf dem Zustand der Art des DCN, zu welchem die UE Zugang anfordert, ob der Zugang durch die UE gewährt werden soll;
wobei die Verarbeitungseinheit insbesondere konfiguriert ist zum:
Erhalten eines Netzwerklastzustands und Bestimmen des Zustands jeder DCN-Art basierend auf der Priorität der DCN-Art und dem Netzwerklastzustand;
wobei der Netzwerklastzustand eine Überlastklasse ist und die Verarbeitungseinheit insbesondere konfiguriert ist zum:
Bestimmen des Zustands jeder DCN-Art basierend auf der Priorität der DCN-Art und der Überlastklasse;
wobei die Einrichtung zur Überlastregelung in den DCN-Knoten integriert ist.

12. Einrichtung zur Überlastregelung nach Anspruch 11, wobei die Verarbeitungseinheit insbesondere konfiguriert ist zum:
Erhalten des Netzwerklastzustands des DCN-Knotens.

13. Einrichtung zur Überlastregelung nach Anspruch 12, wobei die Erhaltungseinheit insbesondere konfiguriert ist zum:
Erhalten, aus der Zugangsanforderungsnachricht, der Art des DCN, zu welchem die UE Zugang anfordert, oder Erhalten der DCN-Art der UE von einem Heimteilnehmerserver (HSS) basierend auf der Zugangsanforderungsnachricht.

14. Einrichtung zur Überlastregelung nach einem der Ansprüche 12 bis 13, wobei die Erhaltungseinheit insbesondere konfiguriert ist zum:
Bestimmen der Priorität der DCN-Art basierend auf einer Dienstart, die durch die DCN-Art unterstützt wird, oder einer Vorkonfiguration eines Netzwerkbetreibers.

15. Einrichtung zur Überlastregelung nach einem der Ansprüche 11 bis 14, wobei die Verarbeitungseinheit insbesondere konfiguriert ist zum:
wenn der Zustand der Art des DCN der Zustand der Nicht-Durchführung von Überlastregelung ist, Gewähren des Zugangs durch die UE; oder
wenn der Zustand der Art des DCN der Zustand der Durchführung von Überlastregelung ist, Auslassen des Gewährens des Zugangs durch die UE;
wenn der Zustand der DCN-Art der Zustand der Durchführung von Überlastregelung ist, Erhalten einer Priorität der UE basierend auf der Zugangsanforderungsnachricht und Bestimmen, basierend auf der Priorität der UE, ob der Zugang durch die UE gewährt werden soll;
Erhalten einer Priorität der UE, durch welche der Zugang gewährt wird; und
wenn die Priorität der UE größer als die Priorität der UE ist, durch welche der Zugang gewährt wird, oder dieser entspricht, Gewähren des Zugangs durch die UE; oder
wenn die Priorität der UE kleiner als die Priorität der UE ist, durch welche der Zugang gewährt wird, Auslassen des Gewährens des Zugangs durch die UE.

## Revendications

1. Procédé de maîtrise d'encombrement, appliqué à un scénario de réseau central dédié, DCN, ayant un nœud de DCN de plusieurs types de DCN, et comprenant :
la détermination (301) d'une priorité de chaque type de réseau central dédié DCN, sur la base d'informations de DCN reçues depuis le nœud de DCN ;
la réception (305) d'un statut de charge du nœud de DCN depuis le nœud de DCN ;
la réception (307) d'un message de demande d'accès envoyé par un équipement utilisateur, UE ;
l'obtention (308), sur la base du message de demande d'accès, d'un type de DCN auquel l'UE demande l'accès, et
la détermination (309) d'un statut du type du DCN auquel l'UE demande l'accès ; et
la détermination (310), sur la base du statut du type du DCN auquel l'UE demande l'accès, d'autoriser ou non l'accès par l'UE ;
dans lequel la détermination (309) par le RAN d'un statut du type de DCN comprend
la détermination du statut de chaque type de DCN sur la base de la priorité dudit type de DCN et du statut de charge de réseau ;
dans lequel le statut de charge de réseau est un degré d'encombrement, et la détermination (309) du statut de chaque type de DCN sur la base de la priorité dudit type de DCN et du statut de charge de réseau comprend :
la détermination du statut de chaque type de DCN sur la base de la priorité dudit type de DCN et du degré d'encombrement ;
dans lequel le procédé est réalisé par un nœud de réseau d'accès radio électrique, RAN.

2. Procédé selon la revendication 1, dans lequel l'obtention du statut de charge de réseau comprend :
la réception, par le nœud de réseau d'accès radio électrique, RAN, du statut de charge de réseau envoyé par le nœud de DCN.

3. Procédé selon la revendication 2, dans lequel l'obtention d'une priorité d'un type de réseau central dédié, DCN, comprend :
la détermination, par le nœud de RAN, de la priorité du type de DCN sur la base d'un type de service pris en charge par le type de DCN ou d'une préconfiguration d'un opérateur, ou
la détermination, par le nœud de RAN, de la priorité du type de DCN sur la base d'informations de DCN envoyées par le nœud de DCN.

4. Procédé de maîtrise d'encombrement, appliqué à un scénario de réseau central dédié, DCN, ayant un nœud de DCN de plusieurs types de DCN, et comprenant :
l'obtention (500) d'une priorité de chaque type de réseau central dédié, DCN ;
la détermination (502) d'un statut de chaque type de DCN sur la base de la priorité dudit type de DCN, dans lequel le statut de chaque type de DCN est un état de réalisation de maîtrise d'encombrement ou un état de non-réalisation de maîtrise d'encombrement ;
la réception (505) d'un message de demande d'accès envoyé par l'équipement utilisateur, UE, le message de demande d'accès étant reçu et transféré par un nœud de RAN ;
l'obtention, sur la base du message de demande d'accès, d'un type d'un DCN auquel l'UE demande l'accès, et l'apprentissage d'un statut du type du DCN auquel l'UE demande l'accès, et
la détermination (506), sur la base du statut du type du DCN auquel l'UE demande l'accès, d'autoriser ou non l'accès par l'UE ;
dans lequel la détermination d'un statut de chaque type de DCN sur la base de la priorité dudit type de DCN comprend :
l'obtention (501) d'un statut de charge de réseau, et la détermination du statut de chaque type de DCN sur la base de la priorité dudit type de DCN et du statut de charge de réseau ;
dans lequel le statut de charge de réseau est un degré d'encombrement, et la détermination (502) du statut de chaque type de DCN sur la base de la priorité dudit type de DCN et du statut de charge de réseau comprend :
la détermination du statut de chaque type de DCN sur la base de la priorité dudit type de DCN et du degré d'encombrement ;
dans lequel le procédé est réalisé par le nœud de DCN.

5. Procédé selon la revendication 4, dans lequel l'obtention d'un statut de charge de réseau comprend : l'obtention, par le nœud de DCN, du statut de charge de réseau du nœud de DCN.

6. Procédé selon la revendication 5, dans lequel l'obtention, sur la base du message de demande d'accès, d'un type d'un DCN auquel l'UE demande l'accès comprend :
l'obtention, par le nœud de DCN à partir du message de demande d'accès, du type du DCN auquel l'UE demande l'accès, ou l'obtention, par le nœud de DCN, du type de DCN de l'UE à partir d'un serveur d'abonné résidentiel HSS sur la base du message de demande d'accès.

7. Procédé selon l'une quelconque des revendications 4 à 6, dans lequel l'obtention d'une priorité d'un type de réseau central dédié, DCN, comprend :
la détermination, par le nœud de DCN, de la priorité du type de DCN sur la base d'un type de service pris en charge par le type de DCN ou d'une préconfiguration d'un opérateur de réseau.

8. Appareil de maîtrise d'encombrement, appliqué à un scénario de réseau central dédié, DCN, ayant un nœud de DCN de plusieurs types de DCN, et comprenant :
une unité d'obtention (600), conçue pour obtenir une priorité de chaque type de réseau central dédié, DCN, sur la base d'informations de DCN reçues depuis le nœud de DCN ;
une unité de réception (602) conçue pour recevoir un statut de charge du nœud de DCN depuis le nœud de DCN ;
l'unité de réception (602) étant en outre conçue pour recevoir un message de demande d'accès envoyé par l'équipement utilisateur, UE, dans lequel
l'unité d'obtention est en outre conçue pour obtenir, sur la base du message de demande d'accès, un type d'un DCN auquel l'UE demande l'accès ; et
l'unité de traitement est en outre conçue pour :
déterminer un statut du type de DCN auquel l'UE demande l'accès, et déterminer, sur la base du statut du type du DCN auquel l'UE demande l'accès, d'autoriser ou non l'accès par l'UE ;
dans lequel l'unité de traitement est spécifiquement conçue pour :
déterminer le statut de chaque type de DCN sur la base de la priorité dudit type de DCN et du statut de charge de réseau ;
dans lequel le statut de charge de réseau est un degré d'encombrement, et l'unité de traitement est spécifiquement conçue pour :
déterminer le statut de chaque type de DCN sur la base de la priorité dudit type de DCN et du degré d'encombrement ;
dans lequel l'appareil de maîtrise d'encombrement est intégré dans un nœud de RAN.

9. Appareil de maîtrise d'encombrement selon la revendication 8, dans lequel l'unité de traitement est spécifiquement conçue pour :
recevoir le statut de charge de réseau envoyé par le nœud de DCN.

10. Appareil de maîtrise d'encombrement selon la revendication 9, l'unité d'obtention étant spécifiquement conçue pour :
déterminer la priorité du type de DCN sur la base d'un type de service pris en charge par le type de DCN ou d'une préconfiguration d'un opérateur ; ou
déterminer la priorité du type de DCN sur la base d'informations de DCN reçues par le nœud de DCN.

11. Appareil de maîtrise d'encombrement, appliqué à un scénario de réseau central dédié, DCN, ayant un nœud de DCN de plusieurs types de DCN, et comprenant :
une unité d'obtention (600), conçue pour obtenir une priorité de chaque type de réseau central dédié, DCN ;
une unité de traitement (601), conçue pour déterminer un statut de chaque type de DCN sur la base de la priorité dudit type de DCN, dans lequel le statut de chaque type de DCN est un état de réalisation de maîtrise d'encombrement ou un état de non-réalisation de maîtrise d'encombrement ; et
une unité de réception (602), conçue pour recevoir un message de demande d'accès envoyé par un équipement utilisateur, UE, le message de demande d'accès ayant été reçu et transféré par un nœud de RAN, dans lequel
l'unité d'obtention est en outre conçue pour obtenir, sur la base du message de demande d'accès, un type d'un DCN auquel l'UE demande l'accès ; et
l'unité de traitement est en outre conçue pour : apprendre un statut du type du DCN auquel l'UE demande l'accès, et déterminer, sur la base du statut du type du DCN auquel l'UE demande l'accès, d'autoriser ou non l'accès par l'UE ;
dans lequel l'unité de traitement est spécifiquement conçue pour :
obtenir un statut de charge de réseau, et déterminer le statut de chaque type de DCN sur la base de la priorité dudit type de DCN et du statut de charge de réseau ;
dans lequel le statut de charge de réseau est un degré d'encombrement, et l'unité de traitement est spécifiquement conçue pour :
déterminer le statut de chaque type de DCN sur la base de la priorité dudit type de DCN et du degré d'encombrement ;
dans lequel l'appareil de maîtrise d'encombrement est intégré dans le nœud de DCN.

12. Appareil de maîtrise d'encombrement selon la revendication 11, dans lequel l'unité de traitement est spécifiquement conçue pour :
obtenir l'état de charge de réseau du nœud de DCN.

13. Appareil de maîtrise d'encombrement selon la revendication 12, dans lequel l'unité d'obtention est spécifiquement conçue pour :
obtenir, à partir du message de demande d'accès, le type de DCN auquel l'UE demande l'accès, ou obtenir le type de DCN de l'UE à partir d'un serveur d'abonné résidentiel HSS sur la base du message de demande d'accès.

14. Appareil de maîtrise d'encombrement selon l'une quelconque des revendications 12 et 13, dans lequel l'unité d'obtention est spécifiquement conçue pour :
déterminer la priorité du type de DCN sur la base d'un type de service pris en charge par le type de DCN ou d'une préconfiguration d'un opérateur de réseau.

15. Appareil de maîtrise d'encombrement selon l'une quelconque des revendications 11 à 14, dans lequel l'unité de traitement est spécifiquement conçue pour :
si le statut du type de DCN est l'état de non-réalisation de maîtrise d'encombrement, autoriser l'accès par l'UE ; ou
si le statut du type de DCN est l'état de réalisation de maîtrise d'encombrement, ignorer l'autorisation d'accès par l'UE ;
si le statut du type de DCN est l'état de réalisation de maîtrise d'encombrement, obtenir une priorité de l'UE sur la base du message de demande d'accès, et déterminer, sur la base de la priorité de l'UE, d'autoriser ou non l'accès par l'UE ;
obtenir une priorité de l'UE par laquelle l'accès est autorisé ; et
si la priorité de l'UE est supérieure ou égale à la priorité de l'UE par laquelle l'accès est autorisé, autoriser l'accès par l'UE ; ou
si la priorité de l'UE est inférieure à la priorité de l'UE par laquelle l'accès est autorisé, ignorer l'autorisation d'accès par l'UE.
